# FASCICULE DE BREVET EUROPEEN

(11) **EP 2 711 732 B1**
(45) Date de publication et mention de la délivrance du brevet: **18.05.2016**
(21) Numéro de dépôt: 13290222.2
(22) Date de dépôt: 17.09.2013
(51) Int. Cl.: G01S 17/10, F42C 13/02, G01S 17/66, F41G 7/22, G01S 7/486, G01S 7/487

(54) **Ecartomètre à imagerie infrarouge et système de visée et de poursuite automatique de cible**
Winkelmessgerät mit Infrarotbildgebung, und automatisches Peil- und Nachverfolgungssystem des Zieles
Deviation indicator with infrared imaging and system for sighting and automatic tracking of a target

(30) Priorité: 20.09.2012 FR 1202493
(43) Date de publication de la demande: 26.03.2014
(73) Titulaire: MBDA France, 92350 Le Plessis-Robinson (FR)
(72) Inventeur: Le Marec, Jean-Claude, 75015 Paris (FR)
(74) Mandataire: Gevers & Orès

(56) Documents cités:
- EP-A2- 0 309 927
- EP-A2- 1 248 120
- GB-A- 2 280 734
- US-A- 3 935 818
- US-B2- 6 626 396

## Description

La présente invention concerne un écartomètre à imagerie infrarouge et un système de visée et de poursuite automatique d'une cible, destinés à être embarqués à bord d'un vecteur, tel qu'un missile.

On sait que, pour pouvoir prendre en charge une cible, un missile doit pouvoir repérer celle-ci, la cadrer dans son champ de visée et la maintenir centrée dans ce champ par une poursuite automatique malgré les déplace- ments relatifs de ladite cible et dudit missile. Pour ce faire, il est déjà connu d'utiliser un écartomètre à imagerie infrarouge comportant un détecteur matriciel infrarouge, un dispositif optique de visée à travers lequel ledit détecteur matriciel infrarouge est apte à observer ladite cible, et un dispositif de commande et de traitement des images infrarouge formées sur ledit détecteur matriciel infrarouge, ledit dispositif optique de visée étant orientable et asservi en direction de ladite cible par ledit dispositif de commande et de traitement d'images.

Par ailleurs, pour déclencher la mise à feu de l'arme de destruction portée par ledit missile afin de détruire ladite cible, ledit missile comporte un détecteur de proximité, encore appelé proximètre ou fusée de proximité, mesurant la distance missile-cible, lorsque le missile et la cible sont proches l'un de l'autre.

Un tel détecteur de proximité comporte généralement une pluralité d'éléments latéraux angulairement équirépartis sur le fuselage du missile pour créer une couverture de détection de 360° autour de ce dernier. Un tel détecteur de proximité occupe donc un volume important du missile. De plus, les dispositifs d'interface mécaniques et électriques nécessités par un tel détecteur de proximité sont complexes, coûteux, et encombrants.

Par ailleurs, par le document US 6 626 396 B2, on connaît un écartomètre à imagerie infrarouge destiné à être embarqué à bord d'un vecteur, tel qu'un missile, et comprenant :
- un détecteur matriciel infrarouge, apte à former une pluralité d'images infrarouge successives,
- un dispositif optique de visée, à travers lequel ledit détecteur matriciel infrarouge est apte à observer une cible en rapprochement,
- un laser rouge apte, par l'intermédiaire dudit dispositif unique optique de visée, à émettre des impulsions laser infrarouge en direction de ladite cible, les échos desdites impulsions laser infrarouge, renvoyés par ladite cible, étant reçus par ledit détecteur matriciel infrarouge à travers ledit dispositif optique de visée, et
- un dispositif de commande et de traitement pour commander ledit détecteur matriciel infrarouge, pour traiter les images infrarouge formées sur ledit détecteur matriciel infrarouge et pour traiter les images desdits échos, formées sur ledit détecteur matriciel infrarouge, pour déterminer la distance à laquelle se trouve ladite cible.

La présente invention a pour objet de remédier aux inconvénients de la technique antérieure en simplifiant et en unifiant les dispositifs de poursuite et de détection de proximité dudit missile.

À cette fin, selon l'invention, l'écartomètre à imagerie infrarouge du type rappelé ci-dessus est remarquable :
- en ce que ledit dispositif de commande et de traitement associe à chacune desdites impulsions laser infrarouge émise par ledit laser infrarouge une pluralité de fenêtres d'acquisition d'écho successives par ledit détecteur matriciel infrarouge ; et
- en ce que l'ouverture des fenêtres d'acquisition d'écho est effectuée, par rapport à l'émission de l'impulsion laser infrarouge correspondante, avec plusieurs retards successifs décroissants 2D/c (c étant la vitesse de la lumière) correspondant à des distances D attendues successives décroissantes entre ledit écartomètre et la cible jusqu'à une faible valeur prédéterminée à partir de laquelle le dispositif de commande et de traitement prépare la mise à feu de l'arme de destruction portée par ledit vecteur.

Ainsi, grâce à la présente invention, ledit écartomètre à imagerie infrarouge devient tridimensionnel et peut, en alternance, remplir la fonction d'imagerie infrarouge et la fonction de proximétrie. Les proximètres mis en oeuvre dans la technique antérieure peuvent donc, ainsi que leurs inconvénients, être supprimés.

On sait que, généralement, les écartomètres à imagerie infrarouge travaillent dans la bande de fréquence comprise entre 3 *µ*m et 5 *µ*m avec une fréquence comprise entre 100 Hz et 1 kHz. La longueur d'onde et la fréquence desdites impulsions laser infrarouge mises en oeuvre dans l'invention peuvent alors être respectivement comprises entre 0,9 *µ*m et 2 *µ*m et entre 1 kHz et 10 kHz.

Par exemple, ledit laser infrarouge de l'invention est de type diode laser, YAG, Erbium-YAG ou fibre dopée à l'erbium.

Ainsi, selon l'invention, le dispositif de commande et de traitement associe à chacune desdites impulsions laser infrarouge émise par ledit laser infrarouge une fenêtre d'acquisition d'écho par ledit détecteur matriciel infrarouge et l'ouverture d'une telle fenêtre d'acquisition d'écho se fait avec un retard égal à 2 D/c par rapport à l'impulsion laser infrarouge correspondante, c étant la vitesse de la lumière et D une distance attendue entre ledit écartomètre et la cible.

Le retard 2 D/c correspond donc à la durée entre l'émission d'une impulsion laser infrarouge et la réception de l'écho correspondant, dans le cas où la cible se trouverait à la distance D de l'écartomètre. Tant que la distance cible-écartomètre est supérieure à D, aucune image d'écho n'est formée sur le détecteur matriciel. En revanche, dès que cette distance devient égale à D, l'image de l'écho se forme sur ledit détecteur matriciel, et cette distance est indiquée par l'apparition de cette image d'écho.

Après constat que la cible vient réellement de passer à une valeur particulière D1 de D, l'ouverture des fenêtres d'acquisition d'écho est ensuite effectuée avec un retard égal à 2 D2/c, D2 étant une distance attendue inférieure à D1. Il est ainsi possible de suivre successivement le rapprochement de ladite cible, en donnant à la distance D des valeurs successives décroissantes. Lorsque la distance à laquelle se trouve la cible atteint une faible valeur prédéterminée, le dispositif de commande et de traitement prépare la mise à feu de l'arme de destruction portée par ledit vecteur.

Afin d'éviter la détection de faux échos qui seraient dus au bruit de fond, le dispositif de commande et de traitement assigne auxdits échos des impulsions laser infrarouge une portion déterminée dudit détecteur matriciel, le nombre de pixels de ladite portion du détecteur matriciel étant également déterminé, et considère qu'une image reçue sur ladite portion déterminée du détecteur matriciel est un des échos des impulsions laser infrarouge, lorsque la somme des signaux reçus par les pixels de ladite portion déterminée du détecteur matriciel est supérieure à un seuil prédéterminé.

La présente invention concerne également un système de visée et de poursuite automatique de cible comportant un écartomètre conforme à la présente invention.

À toutes fins utiles, on notera que le document US 3 935 818 enseigne d'utiliser un capteur unique pour effectuer la poursuite nécessaire au guidage du missile et pour déclencher le détecteur de proximité. Dans ce document, les deux fonctions sont effectuées en alternance, par un traitement du signal commun, mais rien n'est indiqué sur le principe de détermination de la distance (temps de vol, modulation du signal, etc.) et sur les caractéristiques du capteur commun.

Les figures du dessin annexé feront bien comprendre comment l'invention peut être réalisée. Sur ces figures, des références identiques désignent des éléments semblables.

La figure 1 est le schéma synoptique d'un système de visée et de poursuite automatique de cible comportant un écartomètre à imagerie infrarouge connu.

La figure 2 est un diagramme, en fonction du temps t, illustrant la suite des fenêtres d'intégration de l'écartomètre de la figure 1.

La figure 3 est le schéma synoptique d'un système de visée et de poursuite automatique de cible comportant l'écartomètre conforme à la présente invention.

La figure 4 est un diagramme, en fonction du temps t, illustrant la suite des fenêtres d'intégration de l'écartomètre du système de la figure 3 et la suite des impulsions laser infrarouge émises par ce dernier.

La figure 5 illustre schématiquement la zone de la matrice du détecteur matriciel infrarouge sur laquelle se forment les images des échos des impulsions laser infrarouge.

Les figures 6A, 6B et 7A, et 7B illustrent, en fonction du temps t, un processus préféré du fonctionnement du proximètre de l'écartomètre conforme à la présente invention.

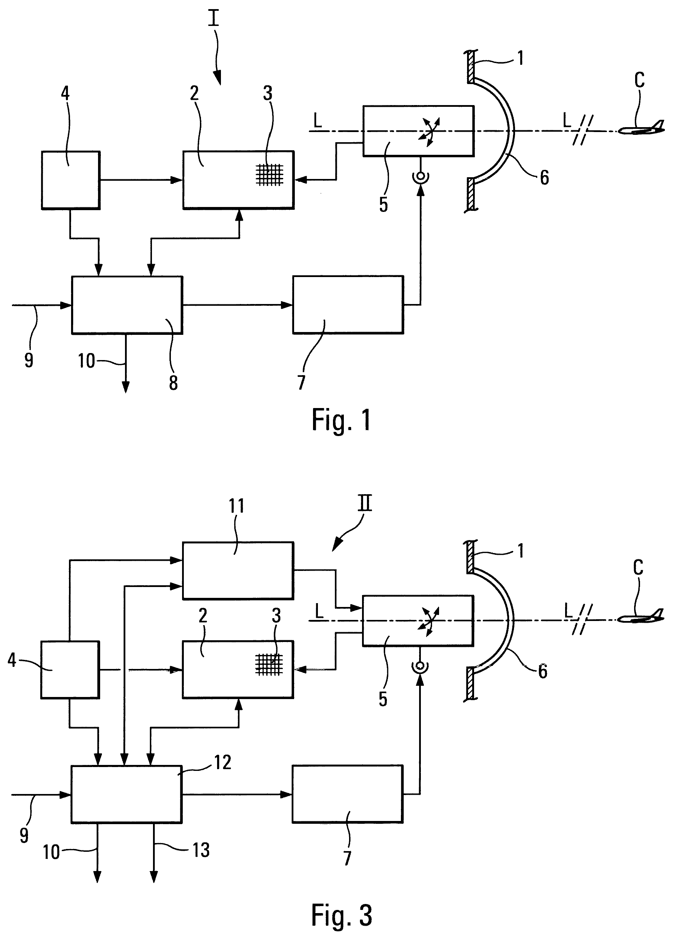

Le système de visée et de poursuite automatique de cible I, illustré schématiquement par la figure 1, est de type connu à écartomètre à imagerie infrarouge et est embarqué à bord d'un missile 1 d'axe L-L. dont seule une partie de l'avant du fuselage est représentée.

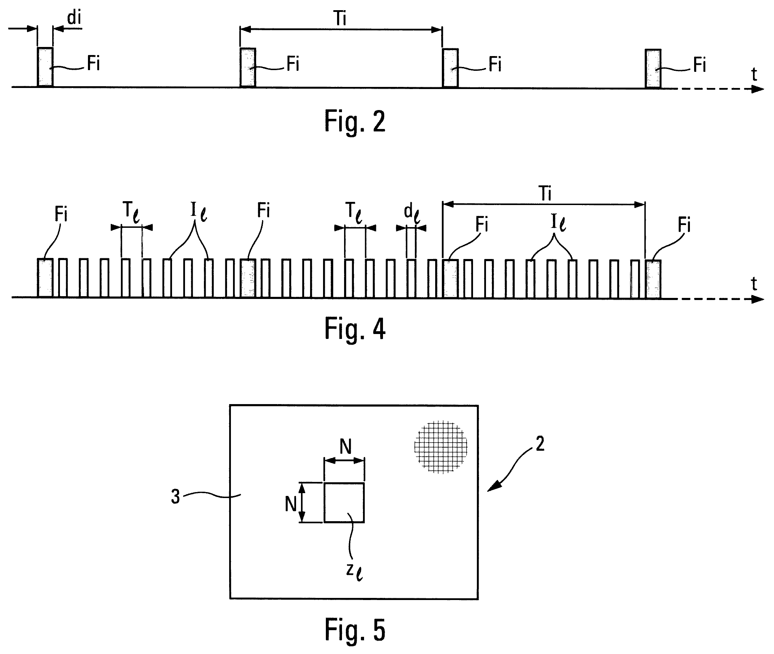

Ce système I comporte un détecteur infrarouge 2, pourvu d'une matrice de détection infrarouge 3 et apte à ouvrir, sous la dépendance d'une horloge 4, des fenêtres d'intégration d'image Fi périodiquement espacées (voir la figure 2). Par exemple, la matrice de détection infrarouge 3 intègre des images infrarouge dans la bande de fréquence comprise entre 3 et 5 µm, la durée di des fenêtres Fi est de l'ordre de 0,5 ms et la fréquence 1/Ti desdites fenêtres Fi est comprise entre 100 Hz et 1 k Hz.

Le détecteur infrarouge 2 est apte à observer une cible C, aérienne ou terrestre, par l'intermédiaire d'un dispositif optique de visée orientable 5, qui regarde vers l'avant du missile 1 à travers un dôme multispectral 6 (par exemple en saphir) de ce dernier et dont la ligne de visée est asservie en orientation autour de l'axe longitudinal L-L par l'intermédiaire d'un dispositif d'asservissement 7, pour pouvoir poursuivre la cible C.

Les signaux d'image reçus par le détecteur infrarouge 2 pendant les fenêtres Fi sont intégrés et traités dans un dispositif de commande et de traitement d'image 8, qui, par une ligne 9, reçoit des informations de position et d'attitude provenant de la centrale inertielle (non représentée) du missile 1. Le dispositif de commande et de traitement d'image 8 commande le dispositif d'asservissement 7 pour la visée et la poursuite de la cible C par le dispositif optique de visée 5.

A la sortie 10 du dispositif de commande et de traitement d'image 8 apparaissent les signaux d'écartométrie permettant de guider le missile 1 vers la cible C.

Le système II de visée et de poursuite automatique de cible à écartomètre à imagerie infrarouge, conforme à la présente invention et illustré schématiquement par la figure 3, comporte les éléments 1 à 7 et 9, 10 du système connu I décrit ci-dessus en regard de la figure 1.

Ce système II comporte, de plus, un laser infrarouge 11 apte à émettre, par l'intermédiaire du dispositif optique de visée orientable 5, des impulsions laser infrarouge Iℓ en direction de la cible C. Par exemple, le laser infrarouge 11 est du type diode laser, YAG, Erbium-YAG ou à fibre dopée à l'erbium et émet dans une bande infrarouge comprise entre 0,9 et 2 *µ*m, la durée dℓ des impulsions laser Iℓ est de l'ordre de 1 à quelques dizaines de ns et la fréquence 1/Tℓ desdites impulsions laser - très supérieure à la fréquence 1/Ti des fenêtres Fi - est par exemple comprise entre 1 kHz et 10 kHz (voir la figure 4).

Ainsi, comme l'illustre la figure 4, un faisceau collimaté d'une pluralité d'impulsions laser Iℓ peut être émis, par l'intermédiaire du dispositif optique de visée orientable 5 et du dôme 6, en direction de la cible C.

En remplacement du dispositif de commande et de traitement d'images 8 du système I de la figure 1, le système II de la figure 2 comporte un dispositif de commande et de traitement 12, non seulement en liaison avec le détecteur matriciel 2 et avec le dispositif d'asservissement 7, mais encore avec le laser infrarouge 11. De plus, le dispositif de commande et de traitement 12 est apte, non seulement à commander le détecteur matriciel infrarouge 2 et à traiter les images infrarouge d'écartométrie (de façon identique au dispositif 8), mais encore à commander le laser infrarouge 11 et à traiter les images des échos desdites impulsions laser renvoyés par la cible C.

Le dispositif de commande et de traitement 12 assigne aux échos des impulsions laser infrarouge une portion déterminée zℓ de la matrice de détection 3 du détecteur infrarouge 2. Comme représenté sur la figure 5, cette portion zt peut être disposée centralement par rapport à la matrice de détection 3 et présenter une forme carrée contenant N² pixels. Lorsque ladite portion zℓ de la matrice de détection 3 est illuminée, le dispositif de commande et de traitement 12 considère que l'image correspondante est un écho d'une impulsion laser Iℓ si la somme des signaux reçus par les pixels de ladite portion zℓ est supérieure à un seuil préétabli.

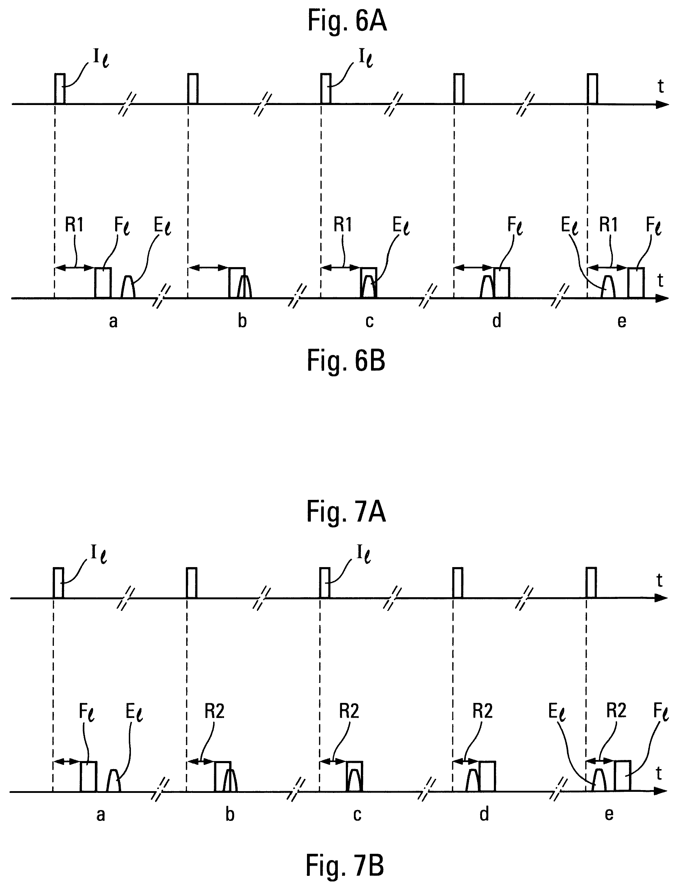

Les figures 6A, 6B, 7A, 7B illustrent le mode de fonctionnement du système II conforme à l'invention. Dans une étape de fonctionnement,
- le dispositif de commande et de traitement 12 associe à chaque impulsion laser infrarouge Iℓ une fenêtre d'acquisition d'écho Fℓ,
- les fenêtres d'acquisition d'écho Fℓ sont d'abord ouvertes avec un retard R1 par rapport aux impulsions laser infrarouge Iℓ égal à 2 D1/c, c étant la vitesse de la lumière et D1 une distance attendue entre le système II et la cible C,
- tant que la cible C est à une distance du système II supérieure à D1 (cas du schéma a de la figure 6B), aucun écho Eℓ d'impulsion laser ne se trouve dans la fenêtre Fℓ et aucune image d'écho n'apparaît dans la portion zℓ de la matrice 3,
- lorsque la cible C atteint la distance D1, l'écho Et passe successivement à travers des fenêtres d'acquisition d'écho successives (schéma b, c, et d de la figure 6B) puis,
- ce mouvement relatif se continuant, l'écho Et sort d'une fenêtre Fℓ suivante.

Ainsi, sur la portion zℓ de la matrice de détection infrarouge 3, l'image de l'écho Et croît, puis disparaît. Lorsque cette disparition se produit, on est sûr que la cible C est juste passée à la distance D1 du système II de l'invention.

On peut alors recommencer successivement une ou plusieurs fois cette étape de fonctionnement avec un retard R2 inférieur à R1 (voir les figures 7A et 7B), correspondant à une distance D2 inférieure à D1, puis avec un retard R3 inférieur à R2, etc....

Ainsi, étape par étape, on peut connaître les valeurs décroissantes successives D1, D2, ...de la distance à laquelle se trouve la cible C.

Lorsque cette distance prend une faible valeur prédéterminée Di, le dispositif de commande et de traitement 1 2 extrapole la trajectoire relative missile-cible et émet, à sa sortie 13, un signal de mise à feu de l'arme de destruction que porte le missile 1.

## Revendications

1. Ecartomètre à imagerie infrarouge, destiné à être embarqué à bord d'un vecteur (1), tel qu'un missile, et comprenant :
• un détecteur matriciel infrarouge (2,3), apte à former une pluralité d'images infrarouge successives,
• un dispositif optique de visée (5), à travers lequel ledit détecteur matriciel infrarouge (2,3) est apte à observer une cible (C) en rapprochement,
• un laser infrarouge (11) apte, par l'intermédiaire dudit dispositif optique de visée (5), à émettre des impulsions laser infrarouge en direction de ladite cible (C), les échos desdites impulsions laser infrarouge, renvoyés par ladite cible, étant reçus par ledit détecteur matriciel infrarouge (2,3) à travers ledit dispositif optique de visée (5), et
• un dispositif de commande et de traitement (12) pour commander ledit détecteur matriciel infrarouge (2,3), pour traiter les images infrarouge formées sur ledit détecteur matriciel infrarouge et pour traiter les images desdits échos, formées sur ledit détecteur matriciel infrarouge (2,3), pour déterminer la distance à laquelle se trouve ladite cible (C),
**caractérisé :**
• **en ce que** ledit dispositif de commande et de traitement (12) associe à chacune desdites impulsions laser infrarouge émise par ledit laser infrarouge une pluralité de fenêtres d'acquisition d'écho (Fℓ) successives par ledit détecteur matriciel infrarouge (2, 3) ; et
• **en ce que** l'ouverture des fenêtres d'acquisition d'écho est effectuée, par rapport à l'émission de l'impulsion laser infrarouge correspondante, avec plusieurs retards successifs décroissants 2D/c (c étant la vitesse de la lumière) correspondant à des distances D attendues successives décroissantes entre ledit écartomètre et la cible jusqu'à une faible valeur (Di) prédéterminée à partir de laquelle le dispositif de commande et de traitement (T2) prépare la mise à feu de l'arme de destruction portée par ledit vecteur (1).

2. Ecartomètre selon la revendication 1,
**caractérisé en ce que** la longueur d'onde desdites impulsions laser infrarouge est comprise entre 0,9 µm et 2 µm.

3. Ecartomètre selon l'une des revendications 1 ou 2,
**caractérisé en ce que** la fréquence desdites impulsions laser infrarouge est comprise entre 1 kHz et 10 kHz.

4. Ecartomètre selon l'une des revendications 1 à 3,
**caractérisé en ce que** ledit dispositif de commande et de traitement (12) assigne auxdits échos des impulsions laser infrarouge une portion déterminée (zℓ) dudit détecteur matriciel (2,3), le nombre de pixels (N²) de ladite portion de détecteur matriciel étant également déterminé, et considère qu'une image reçue sur ladite portion déterminée du détecteur matriciel est un des échos des impulsions laser infrarouge lorsque la somme des signaux reçus par les pixels de ladite portion déterminée du détecteur matriciel est supérieure à un seuil prédéterminé.

5. Système de visée et de poursuite automatique de cible,
**caractérisé en ce qu'**il comporte un écartomètre à imagerie infrarouge tel que spécifié sous l'une quelconque des revendications 1 à 4.

## Patentansprüche

1. Abstandsmesser mit Infrarotbildgebung, der dazu bestimmt ist, an Bord eines Trägers (1), wie eines Flugkörpers, eingebaut zu werden, und umfassend:
• einen Infrarot-Matrixdetektor (2, 3), der geeignet ist, eine Vielzahl von aufeinanderfolgenden Infrarotbildern zu bilden,
• eine optische Visiereinrichtung (5), durch die der Infrarot-Matrixdetektor (2, 3) geeignet ist, ein Ziel (C) aus der Nähe zu beobachten,
• einen Infrarotlaser (11), der geeignet ist, mit Hilfe der optischen Visiereinrichtung (5) Infrarot-Laserimpulse in Richtung des Ziels (C) zu entsenden, wobei die Echos der Infrarot-Laserimpulse, die vom Ziel zurückgesandt werden, vom Infrarot-Matrixdetektor (2, 3) durch die optische Visiereinrichtung (5) empfangen werden, und
• eine Steuer- und Bearbeitungseinrichtung (12), um den Infrarot-Matrixdetektor (2, 3) zu steuern, um die auf dem Infrarot-Matrixdetektor gebildeten Infrarotbilder zu bearbeiten und um die Bilder der Echos, die auf dem Infrarot-Matrixdetektor (2, 3) gebildet werden, zu bearbeiten, um den Abstand, in dem sich das Ziel (C) befindet, zu bestimmen,
**dadurch gekennzeichnet:**
• **dass** die Steuer- und Bearbeitungseinrichtung (12) jedem der Infrarot-Laserimpulse, der von dem Infrarotlaser entsandt wird, eine Vielzahl von aufeinanderfolgenden Echoaufnahmefenstern (Fℓ) durch den Infrarot-Matrixdetektor (2, 3) zuordnet; und
• **dass** die Öffnung der Echoaufnahmefenster in Bezug zum Senden des entsprechenden Infrarot-Laserimpulses mit mehreren aufeinanderfolgenden abnehmenden Verzögerungen 2D/c (wobei c die Geschwindigkeit des Lichts ist) entsprechend aufeinanderfolgenden erwarteten abnehmenden Abständen D zwischen dem Abstandsmesser und dem Ziel bis zu einem vorbestimmen geringen Wert (Di) erfolgt, ab dem die Steuer- und Bearbeitungseinrichtung (T2) die Zündung der vom Träger (1) getragenen Zerstörungswaffe vorbereitet.

2. Abstandsmesser nach Anspruch 1,
**dadurch gekennzeichnet, dass** die Wellenlänge der Infrarot-Laserimpulse zwischen 0,9 µm und 2 µm beträgt.

3. Abstandsmesser nach einem der Ansprüche 1 oder 2,
**dadurch gekennzeichnet, dass** die Frequenz der Infrarot-Laserimpulse zwischen 1 kHz und 10 kHz beträgt.

4. Abstandsmesser nach einem der Ansprüche 1 bis 3,
**dadurch gekennzeichnet, dass** die Steuer- und Bearbeitungseinrichtung (12) den Echos der Infrarot-Laserimpulse einen bestimmen Abschnitt (zℓ) des Matrixdetektors (2, 3) zuordnet, wobei die Pixelanzahl (N²) des Matrixdetektorabschnitts ebenfalls bestimmt wird, und annimmt, dass ein auf dem bestimmten Abschnitt des Matrixdetektors empfangenes Bild eines der Echos der Infrarot-Laserimpulse ist, wenn die Summe der von den Pixels des bestimmten Abschnitts des Matrixdetektors empfangenen Signale größer als eine vorbestimmte Schwelle ist.

5. Automatisches Visier- und Verfolgungssystem eines Ziels,
**dadurch gekennzeichnet, dass** es einen Abstandsmesser mit Infrarotbildgebung, wie in einem der Ansprüche 1 bis 4 definiert, umfasst.

## Claims

1. Deviation indicator with infrared imagery intended to be installed on board a carrier (1), such as a missile, and comprising:
• an infrared matrix detector (2, 3), able to form a plurality of successive infrared images,
• an optical aiming device (5), through which said infrared matrix detector (2, 3) is able to observe an approaching target (C),
• an infrared laser (11) able, by means of said optical aiming device (5), to emit infrared laser pulses in the direction of said target (C), the echoes of said infrared laser pulses, reflected by said target, being received by said infrared matrix detector (2, 3) through said optical aiming device (5), and
• a control and processing device (12) for controlling said infrared matrix detector (2, 3), for processing the infrared images formed on said infrared matrix detector, and for processing the images of said echoes, formed on said infrared matrix detector (2, 3), in order to determine the distance at which said target (C) is situated,
**characterised:**
• **in that** said control and processing device (12) associates with each of said infrared laser pulses emitted by said infrared laser a plurality of successive echo acquisition windows (Fℓ) by means of said infrared matrix detector (2, 3); and
• **in that** the opening of the echo acquisition windows is effected, with respect to the emission of the corresponding infrared laser pulse, with a plurality of decreasing successive delays 2 D/c (c being the speed of light) corresponding to decreasing successive expected distances D between said deviation indicator and the target up to a predetermined low value (Di) as from which the control and processing device (T2) prepares the firing of the destructive weapon carried by said carrier (1).

2. Deviation indicator according to claim 1,
**characterised in that** the wavelength of said infrared laser pulses is between 0.9 µm and 2 µm.

3. Deviation indicator according to either claim 1 or claim 2,
**characterised in that** the frequency of said infrared laser pulses is between 1 kHz and 10 kHz.

4. Deviation indicator according to any of claims 1 to 3,
**characterised in that** said control and processing device (12) assigns a given portion (zt) of said matrix detector (2, 3) to said echoes of the infrared laser pulses, the number of pixels (N²) of said matrix detector portion also being determined, and considers that an image received on said given portion of the matrix detector is one of the echoes of the infrared laser pulses, when the sum of the signals received by the pixels of said given portion of the matrix detector is above a predetermined threshold.

5. System for automatically aiming at and tracking a target,
**characterised in that** it comprises a deviation indicator with infrared imagery as specified in any of claims 1 to 4.
